Europäisches Patentamt

European Patent Office

Office européen des brevets

(19)

(11) Veröffentlichungsnummer: **0 427 362 A2**

## (12) EUROPÄISCHE PATENTANMELDUNG

(21) Anmeldenummer: 90250278.0

(22) Anmeldetag: 07.11.90

(51) Int. Cl.5: **B05C 11/10**

(30) Priorität: **07.11.89 DE 3937381**

(43) Veröffentlichungstag der Anmeldung:
**15.05.91 Patentblatt 91/20**

(84) Benannte Vertragsstaaten:
**CH DE FR GB IT LI**

(71) Anmelder: **Klatt, Helmuth, Dipl.-Ing.**
**Eichenallee 62**
**W-1000 Berlin 19(DE)**

(72) Erfinder: **Klatt, Helmuth, Dipl.-Ing.**
**Eichenallee 62**
**W-1000 Berlin 19(DE)**

(74) Vertreter: **Pfenning, Meinig & Partner**
**Kurfürstendamm 170**
**W-1000 Berlin 15(DE)**

(54) Verfahren und Vorrichtung zum Dosieren und Auftragen von pastösen Medien.

(57) Es wird ein Verfahren und eine Vorrichtung zum Dosieren und Auftragen von pastösen Medien auf einen Gegenstand vorgeschlagen, bei denen ein mit dem Medium gefülltes Dosiergerät relativ zum Gegenstand verfahrbar ist. Das Dosiergerät wird abhängig von der gewünschten Auftragmenge mit Druck beaufschlagt. Dem Dosiergerät zugeordnet ist eine Inspektionsvorrichtung, die vor dem Dosieren an der Auftragstelle den Reflexionsgrad mißt. Nach dem Auftragen wird der Reflexionsgrad erneut gemessen und mit einem vorgegebenen Reflexionsgrad verglichen.

FIG.1

EP 0 427 362 A2

# VERFAHREN UND VORRICHTUNG ZUM DOSIEREN UND AUFTRAG VON PASTÖSEN MEDIEN

Die Erfindung betrifft ein Verfahren und eine Vorrichtung zum Dosieren von pastösen Medien gemäß dem Oberbegriff des Hauptanspruchs und dem des nebengeordneten Anspruchs.

Aus der DE-OS 37 28 054 ist ein Verfahren und eine Vorrichtung zum Dosieren und Auftragen flüssiger oder pastöser Medien auf einen Gegenstand bekannt, bei denen ein mit dem flüssigen oder pastösen Medium gefülltes Dosiergerät relativ zu dem Gegenstand positioniert wird. Das spritzartige Dosiergerät wird mit einem Druckstoß beaufschlagt, wodurch sich der Kolben des Dosiergerätes verschiebt und das Medium ausstößt. Über einen Füllstandssensor wird der Füllstand des Mediums in dem Dosiergerät erfaßt und die Druckbeaufschlagung wird abhängig vom Füllstand verändert. Weiterhin ist eine Steuer- und Regeleinrichtung beispielsweise ein Mikroprozessor vorgesehen, über die das ausgebrachte Volumen unter Berücksichtigung weiterer Parameter, wie Temperatur, Viskosität und den Füllstand bestimmt wird. Obwohl dieses bekannte Verfahren und die Vorrichtung sehr viele Vorteile aufweisen und alle für die Dosierung relevanten Parameter berücksichtigt werden können, war es dennoch bisher nicht möglich, alle negativen Einflüsse auf den einwandfreien Dosiervorgang aus dem Wege zu räumen. Beispielsweise sind teilweise die Dosierkartuschen nicht luftblasenfrei abgefüllt oder im Falle von Lötzinn als auszubringendes Medium sind einige "Lötkugeln" in ihrer Form oftmals elliptisch anstatt sphärisch oder sie sind zu groß und verstopfen die Kanüle der Kartusche. Die Folge dieser Sachverhalte ist, daß der Dosiervorgang einfach aussetzt, d.h. trotz Druckbeaufschlagung ein Medium durch die Kanüle der Kartusche ausgebracht wird. Dieser Mangel konnte bisher allenfalls durch nachträgliche optische Inspektion und durch Nachlöten behoben werden, was zeitraubend und kostenträchtig ist.

Der Erfindung liegt somit die Aufgabe zugrunde, ein Verfahren und eine Vorrichtung zum Dosieren und Auftragen von pastösen Medien zu schaffen, mit denen eine schnelle Überwachung der ausgebrachten Menge des Mediums möglich ist.

Diese Aufgabe wird erfindungsgemäß durch die kennzeichnenden Merkmale des Hauptanspruchs und des nebengeordneten Anspruchs gelöst.

Dadurch, daß zusammen mit dem Dosiergerät eine Inspektionsvorrichtung verfahrbar ist, die den Reflexionsgrad der Auftragstelle vor dem Auftragen und nach dem Auftragen des Mediums mißt und aus dem Ergebnis dieser Messung bestimmt, ob das Medium bzw. eine genügende Menge des Mediums ausgestoßen wurde, wobei eine Fehlermeldung im Fehlerfalle ausgegeben oder nachdosiert wird, wird eine optische Nachkontrolle der Lötpunkte oder dergleichen überflüssig und aufwendige Nacharbeiten entfallen.

Durch die in den Unteransprüchen angegebenen Maßnahmen sind vorteilhafte Weiterbildungen und Verbesserungen möglich.

Ein Ausführungsbeispiel der Erfindung ist in der Zeichnung dargestellt und wird in der nachfolgenden Beschreibung näher erläutert.

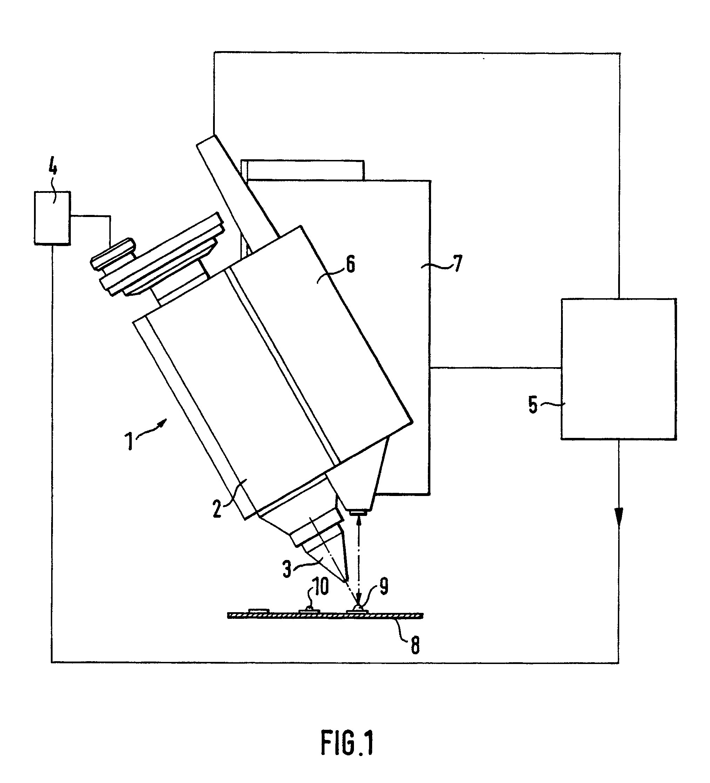

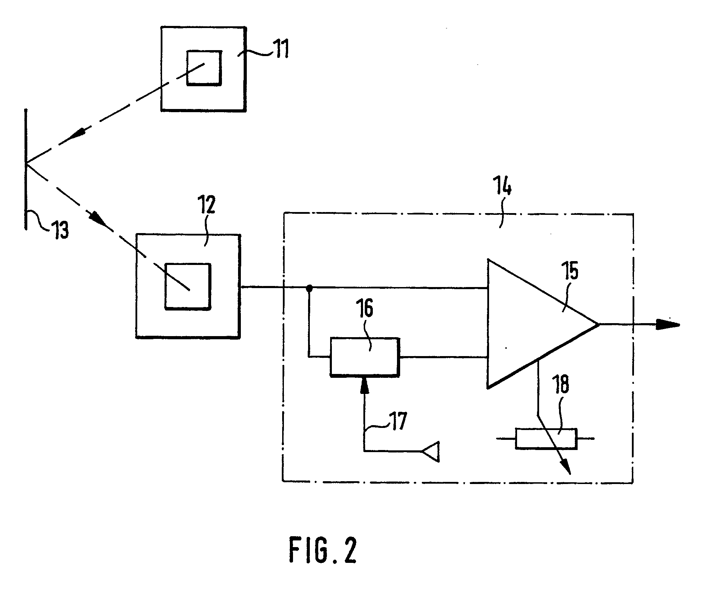

Figur 1 zeigt eine schematische Ansicht des Dosiergerätes mit der Inspektonsvorrichtung und Figure 2 eine analoge Auswerteschaltung.

In der Figur 1 ist mit 1 das Dosiergerät bezeichnet, das aus einer Kartusche 2 und einer Kanüle 3 besteht. Dem Dosiergerät 1 ist ein Dosierventil 4 zugeordnet, das von einer einen Mikroprozessor oder dergleichen enthaltenden Steuer- und Regeleinheit 5 angesteuert wird, der auch eine Auswerteschaltung zugeordnet ist. Das Dosierventil 4 ist ein pneumatisches Ventil, wobei in der Zeichnung schematisch nur der Druckanschluß zum Dosiergerät 1 gezeigt ist.

Mit dem Dosiergerät 1 fest gekoppelt ist eine Laseranordnung 6, die eine nicht dargestellte Laserstrahlungsquelle, eine Fokussiereinrichtung und eine Empfängereinheit aufweist, die die von der Strahlungsquelle und der Fokussiereinheit ausgesandte Strahlung nach Reflexion auf einen fotoelektrischen Empfänger, der beispielsweise als Fotodiode ausgebildet ist, lenkt, wobei in der Empfängereinheit eine Schaltung zur Signalaufbereitung vorgesehen ist. Um Störstrahlungseinflüsse zu unterdrücken, ist die Strahlungsquelle moduliert und die Signalaufbereitung selektiv ausgelegt. Die Ausgangsspannung der Schaltung zur Signalaufbereitung ändert sich proportional mit der Intensität der reflektierten Strahlung. Die Laseranordnung 6 ist mit der Steuer- und Regeleinheit 5 verbunden. Dosiergerät 1 und Laseranordnung 6 sitzen auf einer Positioniereinheit 7, die ebenfalls von der Steuer- und Regeleinheit 5 angesteuert wird und Dosiergerät 1 und Laseranordnung 6 in die gewünschte Position bewegt.

Die Wirkungsweise der Vorrichtung soll unter Bezugnahme auf das Aufbringen von Lötpaste auf Leiterplatten 8 erläutert werden. Das Dosiergerät 1 und die Laseranordnung 6 werden über die Positioniereinheit 7 in die gewünschte Position gesteuert, in der ein Lötpunkt 9 auf die Leiterplatte 8 gebracht werden soll. Bevor die Lötpaste ausgestoßen wird, wird die Laserstrahlungsquelle angesteuert und die an der Leiterplatte 8 am Auftragungspunkt reflektierte Strahlung wird von dem fotoelektrischen Empfängerelement erfaßt und als Empfängersignal an die Steuer- und Regel einheit 5 gesandt, die einen Nullabgleich vornimmt. Daraufhin wird die Kartusche 2 mit der Kanüle 3 abgesenkt und das Dosierventil 4 aktiviert, so daß Lötpaste 9 aufgetragen wird. Durch die Laseranordnung 6 wird anschließend wiederum die an der Lötpaste reflektierte Strahlung erfaßt, und über die Steuer- und Regeleinheit 5 wird festgestellt, ob der Reflexionsgrad dem Reflexionsgrad entspricht, der für einen ordnungsgemäßen Lötpastenauftrag festgelegt ist. Dazu sind in einem der Steuer- und Regeleinheit 5 zugeordneten Speicher Reflexionsgrade für das aufzubringende Medium, hier Lötpaste, und für die jeweils aufzubringende Menge gespeichert. Ist beispielsweise. wie am Lötpunkt 10 eine zu geringe Menge an Lötpaste ausgestoßen worden, so wird durch Vergleich des gemessenen Reflexionsgrades mit dem für diese Stelle gespeicherten Reflexionsgrad die Fehldosierung festgestellt. Da die Materialeigenschaften, wie Oberflächenspannung oder dergleichen der Lötpaste bekannt sind, kann mit Hilfe der Reflexionsmessung auch die ausgebrachte Menge bestimmt werden und die Steuer- und Regeleinheit 5 steuert für eine Nachdosierung erneut das Druckventil 4 an, wobei die Zeit der Druckbeaufschlagung entsprechend der auszustoßenden Differenzmenge erfolgt. Nach dem Nachdosieren wird erneut eine Reflexionsgradmessung durch die Laseranordnung 6 vorgenommen und geprüft, 0b die Nachdosierung erfolgreich durchgeführt wurde. Ist die Auftragmenge in Ordnung, so werden das Dosiergerät 1 und die Laseranordnung 6 über die Positioniereinrichtung 7 in die nächste Stellung gesteuert, ansonsten wird eine Fehlermeldung ausgegeben und der Dosiervorgang beendet, damit das Dosiergerät 1 gegebenenfalls überprüft werden kann.

In Figur 2 ist schematisch eine Anordnung zur analogen Signalauswertung dargestellt. Mit 11 ist die Sendeeinheit mit Strahlungsquelle und mit 12 die Empfangseinheit mit Strahlungssensor und Signalaufbereitung bezeichnet. Die Auswerteschaltung 14 weist einen Komparator 15 und eine Sample-and-Hold-Schaltung 16 auf, die mit einem Abgleicheingang 17 versehen ist. Der eine Eingang des Komparators 15 ist mit der Empfangseinheit 12 verbunden, und die Sample-and-Hold-Schaltung 16, die ebenfalls mit der Empfangseinheit 12 verbunden ist, ist mit ihrem Ausgang an den anderen Eingang des Komparators 15 angeschlossen. Die Schwelle des Komparators 15 ist mit einem Einstellglied 18 einstellbar.

Beim Meßvorgang wird durch das Signal "Abgleichen" über den Abgleicheingang 17 die aktuell gemessene Reflexion des Untergrundes 13, z.B. eines Keramiksubstrats oder einer Leiterplatte, in der Sample-and-Hold-Schaltung 16 festgehalten. Der Komparator 15 vergleicht anschließend den Reflexionswert, der sich während des Dosiervorganges ändert, mit dem ursprünglichen. Hat sich der Reflexionswert um einen bestimmten, über das Einstellglied 18 einstellbaren Betrag geändert, gibt der Komparator 15 ein "Gut"-Signal ab. Mit Erscheinen des "Gut"-Signals wird der Dosiervorgang beendet. Eine andere Möglichkeit besteht darin, daß eine feste Zeit lang dosiert wird und danach, falls das Ergebnis noch "Schlecht" sein sollte, so lange mit festen reduzierten Dosierzeiten nachdosiert wird, bis das "Gut"-Signal erscheint.

In einem anderen Ausführungsbeispiel wird die Signalauswertung in digitaler Weise durchgeführt. Dabei ist der Ausgang der Empfangseinheit mit einem A/D-Wandler verbunden, der über einen Prozessorbus an den Mikrocomputer angeschlossen ist. Das analoge, den jeweiligen Reflexionsgrad angebende Ausgangssignal der Empfangseinheit, das in einen digitalen Wert umgewandelt wird, wird in dem Mikrocomputer ausgewertet. Während des Dosiervorganges wird ständig der aktuelle mit dem gewünschten Reflexionswert verglichen. Sind beide Werte gleich, ist das Dosieren beendet.

Im Falle des Dosierens mit einer festen Zeit, wird dann, wenn der gewünschte Reflexionswert nicht erreicht wird, die noch nötige Nachdosierzeit aus dem aktuellen und gewünschten Reflexionswert berechnet. Das Dosierventil 4 wird für die berechnete Nachdosierzeit nochmals geöffnet, und die Dosierwerte werden wieder verglichen.

## Ansprüche

1. Verfahren zum Dosieren und Auftragen von pastösen Medien auf einen Gegenstand, bei dem ein mit dem Medium gefülltes Dosiergerät jeweils relativ zu dem Gegenstand positioniert und mit Druck beaufschlagt wird, wobei über eine Steuer- und Regeleinheit die Druckbeaufschlagung derart gesteuert wird, daß vorwählbare Dosierungen der Medien geliefert werden,
**dadurch gekennzeichnet,**
daß zur Überprüfung der aufgetragenen Menge des pastösen Mediums vor und nach dem und/oder während des Auftragens die Reflexionsgrade an der Auftragstelle gemessen werden und miteinander verglichen werden.

2. Verfahren nach Anspruch 1, dadurch gekennzeichnet, daß mit der Messung des Reflexionsgrades vor dem Auftragen ein Nullabgleich durchgeführt wird.

3. Verfahren nach Anspruch 1 oder 2, dadurch gekennzeichnet, daß abhängig von der Höhe des Reflexionsgrades die ausgebrachte Menge des Mediums berechnet und mit der gewünschten Menge verglichen wird, wobei gegebenenfalls bei Abweichung die Differenzmenge nachdosiert wird.

4. Verfahren nach Anspruch 1 oder Anspruch 2, dadurch gekennzeichnet, daß ein gewünschter Reflexionsgrad vorgegeben wird und beim Auftragen der Reflexionsgrad gemessen wird, wobei bei Gleichheit des vorgegebenen mit dem gemessenen Reflexionsgrad das Auftragen beendet wird.

5. Verfahren nach Anspruch 1 oder Anspruch 2, dadurch gekennzeichnet, daß das pastöse Medium für eine vorgegebene Zeit aufgetragen wird, daß anschließend der Reflexionsgrad gemessen und mit einem vorgegebenen Reflexionsgrad verglichen wird, wobei bei Nichtgleichheit nachdosiert wird.

6. Vorrichtung zum Dosieren und Auftragen von pastösen Medien auf einen Gegenstand mit einem mit dem Medium gefüllten Dosiergerät, einer das Dosiergerät relativ zum Gegenstand verfahrbaren Positioniereinheit und einer Steuer- und Regeleinheit, die das Dosiergerät abhängig von der gewünschten Auftragmenge mit Druck beaufschlagt, **dadurch gekennzeichnet,** daß eine Inspektionsvorrichtung (6) vorgesehen ist, die zusammen mit dem Dosiergerät (1) verfahrbar ist und die eine Strahlungsquelle und einen fotoelektrischen Empfänger zur Messung des Reflexionsgrades an der Auftragstelle des Gegenstandes vor und nach dem und/oder beim Auftragen des pastösen Mediums aufweist, wobei eine Auswerteschaltung einen Vergleich der Reflexionsgrade vornimmt.

7. Vorrichtung nach Anspruch 6, dadurch gekennzeichnet, daß die Strahlungsquelle ein Laser ist.

8. Vorrichtung nach Anspruch 6 oder 7, dadurch gekennzeichnet, daß die Steuer-und Regeleinheit (5) einen Rechner umfaßt, der abhängig von der Hohe des Reflexionsgrades die ausgebrachte Menge des Mediums berechnet und mit der gewünschten Menge vergleicht.

9. Vorrichtung nach Anspruch 6 oder 7, dadurch gekennzeichnet, daß eine analoge Auswerteeinheit mit einem Komparator vorgesehen ist, der den Reflexionsgrad mit einem vorgegebenen Schwellenwert vergleicht.

FIG.1

FIG.2